# DEMANDE DE BREVET EUROPEEN

(11) **EP 1 988 327 A1**
(43) Date de publication de la demande: **05.11.2008**
(21) Numéro de dépôt: 08305103.7
(22) Date de dépôt: 15.04.2008
(51) Int. Cl.: F17C 13/02

(54) **Procédé de traitement de données relatives à une bouteille de fluide sous pression**

(30) Priorité: 03.05.2007 FR 0754838
(71) Demandeur: L'AIR LIQUIDE, Société Anonyme pour l'Etude et l'Exploitation des Procédés Georges Claude, 75007 Paris (FR)
(72) Inventeur: Delecourt, Vincent, 92120 MONTROUGE (FR); Gourlaouen, Vincent, 59120, LOOS (FR); Moutardier, Gilles, 92300 LEVALLOIS (FR); Mouren-Renouard, Emilie, 75006, PARIS (FR); Chevalier, François, 91000 EVRY (FR)
(74) Mandataire: De Cuenca, Emmanuel Jaime

(57) **Abrégé**

Procédé de traitement d'au moins une donnée relative à une bouteille (1) transportable de gaz sous pression ou un ensemble de bouteilles de ce type (cadre de bouteilles), caractérisé en ce que ledit procédé comprend les étapes consistant à :
- émettre un signal radiofréquence contenant ladite donnée,
- recevoir ledit signal radiofréquence et en extraire ladite donnée,
- mesurer la puissance du signal reçu et en déduire une information de localisation de ladite bouteille ou ensemble de bouteilles,
- traiter ladite donnée en fonction de ladite information de localisation,
ledit signal radiofréquence étant émis par un module électronique (10) rapporté sur la bouteille (1), sur un équipement destiné à être connecté à la ou les bouteille(s) (1) parmi : un robinet, un détendeur, une centrale d'inversion.

## Description

La présente invention concerne un procédé d'au moins une donnée relative à une bouteille de fluide sous pression.

L'invention trouve une application particulièrement avantageuse dans le domaine des fluides médicaux ou industriels conditionnés sous pression dans des bouteilles transportables.

On connaît aujourd'hui des systèmes permettant de tracer individuellement des bouteilles transportables de fluide sous pression au cours de leurs déplacements, ainsi que les données qui y sont associées, et ceci tout au long de leur vie : du remplissage jusqu'à la livraison, en passant par la distribution, la maintenance, la ré-épreuve, et même les mouvements de bouteilles chez le client. II est ainsi possible de faire du suivi de lots, notamment en vue d'un rappel de lot si nécessaire.

Ces systèmes connus sont principalement basés sur l'utilisation de codes-barres, dans leur version la plus simple, et parfois de puces RFID (« Radio Frequency IDentification »), dans une version plus sophistiquée.

II est à noter cependant que, si l'on veut tracer les différentes étapes mentionnées plus haut de la vie d'une bouteille, il est nécessaire d'effectuer une opération manuelle de lecture, par exemple au moyen d'un lecteur des codes-barres apposés sur les bouteilles. Cette opération doit être répétée pour chaque bouteille individuellement, ce qui est particulièrement fastidieux dans le cas de parcs de bouteilles importants.

On peut également remarquer que les informations associées aux bouteilles sont généralement des données statiques, essentiellement des données d'identification, comme le numéro de lot, l'identifiant de la bouteille, la date de remplissage ou de ré-épreuve, le type de gaz, etc. II ne s'agit donc pas d'informations dynamiques telles que la mesure de la pression ou de la température par exemple.

Aussi, un but de l'invention est de proposer un procédé de traitement d'au moins une donnée relative à une bouteille de fluide sous pression, qui permettrait d'acquérir ladite donnée de manière automatique, et non manuelle comme dans les systèmes connus, cette acquisition pouvant concerner un nombre quelconque de bouteilles, et non chaque bouteille individuellement.

Ce but est atteint, conformément à l'invention, du fait que ledit procédé comprend les étapes consistant à :
- émettre un signal radiofréquence contenant ladite donnée,
- recevoir ledit signal radiofréquence et en extraire ladite donnée,
- mesurer la puissance du signal reçu et en déduire une information de localisation de ladite bouteille
- traiter ladite donnée en fonction de ladite information de localisation.

De manière pratique, le procédé, objet de l'invention est mis en oeuvre au moyen d'un système de traitement d'au moins une donnée relative à une bouteille de fluide sous pression, remarquable en ce qu'il comprend :
- un module électronique apte à émettre un signal radiofréquence contenant ladite donnée,
- une plateforme de réception et de traitement, apte à recevoir ledit signal radiofréquence et en extraire ladite donnée, à mesurer la puissance du signal reçu et en déduire une information de localisation de ladite bouteille, et à traiter ladite donnée en fonction de ladite information de localisation.

L'invention concerne également un module électronique pour le traitement d'au moins une donnée relative à une bouteille de fluide sous pression, remarquable en ce qu'il comporte au moins :
- des moyens de détermination de ladite donnée,
- un étage d'émission d'un signal radiofréquence contenant ladite donnée.

Par ailleurs, l'invention peut comporter les caractéristiques suivantes :
- lesdits moyens de détermination de ladite donnée comprennent au moins un capteur de mesure,
- ladite donnée étant la pression du fluide dans la bouteille, ledit capteur de mesure est un capteur de pression,
- ladite donnée étant la température du fluide dans la bouteille, ledit capteur de mesure est un capteur de température,
- lesdits moyens de détermination de ladite donnée comprennent au moins un capteur de mesure et une unité de calcul de ladite donnée à partir de la mesure fournie par ledit capteur,
- ladite donnée étant la quantité restante de fluide dans la bouteille, lesdits moyens de détermination de ladite donnée comprennent un capteur de pression et un capteur de température du fluide dans la bouteille, et ladite unité de calcul est une unité de calcul de ladite quantité restante à partir de la pression et de la température fournies par lesdits capteurs,
- le module électronique comprend des moyens de comparaison de ladite donnée à un seuil et des moyens de déclenchement d'une alarme en fonction du résultat de ladite comparaison,
- ledit étage d'émission est apte à émettre un signal radiofréquence d'alarme,
- le module électronique comprend en outre séparément ou en combinaison :
- au moins un système de communication d'informations,
- un capteur de mouvement ou de déplacement,
- un capteur de luminosité,
- un capteur sonore,
- un récepteur radio.

Ainsi, on comprend que le procédé et le système de l'invention permettent de recevoir automatiquement par radiofréquence, sur une plateforme distante éventuellement centralisée, des données relatives à un parc de bouteilles réparties sur un site industriel par exemple, avec la possibilité de localiser les bouteilles individuellement sur le site et donc d'avoir une vision géographique globale de l'état du parc de bouteilles ainsi supervisé.

Bien entendu, les données transmises par radiofréquence à la plateforme de réception et de traitement peuvent aussi bien concerner des données statiques d'identification des bouteilles que des données dynamiques.

En particulier, l'invention trouve un grand intérêt lorsque ladite donnée concerne la quantité de fluide restant dans la bouteille. En effet, cette donnée est étroitement liée à la consommation et à l'autonomie de la bouteille, grandeurs de première importance dans la gestion d'un parc de bouteilles et qui offrent de multiples applications possibles.

Dans ce but, il est prévu par l'invention que, ladite donnée étant la quantité restante de fluide dans la bouteille, lesdits moyens de détermination de ladite donnée comprennent un capteur de pression et un capteur de température du fluide dans la bouteille, et ladite unité de calcul est une unité de calcul de ladite quantité restante à partir de la pression et de la température fournies par lesdits capteurs.

Une première application de l'invention concerne la détermination de l'état de stocks de bouteilles, consistant à localiser les bouteilles par type de fluide, type de bouteilles, type d'application si nécessaire, et visualiser les quantités de fluide restant dans chacune des bouteilles. Cela permet entre autres de faire un état des immobilisations, d'ajuster les stocks d'un atelier à l'autre sur un site industriel, et d'anticiper le remplacement des bouteilles d'une zone du site. Cela permet également de pouvoir vérifier rapidement l'adéquation entre le volume disponible et les besoins pour la production, ainsi que de pouvoir affecter les bouteilles, notamment financièrement, au service utilisateur. Ces applications correspondent en particulier aux problèmes posés par les grands sites qui ont à gérer un nombre important de bouteilles, sur plusieurs zones ou usines, avec des centres de coût différents.

Une deuxième application concerne la gestion du réapprovisionnement en bouteilles. Dans ce cas, l'invention prévoit que la quantité de fluide restant dans la bouteille est comparée à au moins un seuil. L'opérateur peut ainsi connaître automatiquement le nombre de bouteilles à recommander en fonction de ses besoins et des bouteilles qui lui restent réellement. Egalement, il peut maintenir de cette façon un stock équivalent en évitant les dérives. On peut même imaginer d'effectuer une commande automatique à partir des données reçues. De manière à sécuriser ce système de gestion des réapprovisionnements, il est prévu par l'invention qu'une alarme est générée si la quantité restant dans la bouteille est minimum audit seuil.

Une troisième application concerne le suivi de la consommation du fluide contenu dans les bouteilles. En effet, l'accès au niveau restant des bouteilles permet de suivre la consommation réelle en fluide, ce qui rend possible le calcul du coût en fluide pour une fabrication donnée, et, dans un second temps, permet de contrôler la productivité des opérateurs, et d'optimiser les réglages afférents à cette fabrication.

Une quatrième application concerne l'envoi d'informations pertinentes à un équipement qui est relié à la bouteille. II s'agit en fait de réaliser un couple « équipement-bouteille ». En effet, une bouteille au cours de son utilisation et de son remplissage est bien souvent reliée à un équipement, une machine, etc. II y a alors avantage à créer un lien de communication entre la bouteille et cet équipement. De nombreuses utilisations peuvent être envisagées si la bouteille communique ses données (gaz, pression, température, autonomie, etc.) à l'équipement auquel elle est reliée, et réciproquement. Parmi ces utilisations possibles, on peut citer :
- les échanges entre la bouteille et l'analyseur dans le cadre du marché « Gaz et Laboratoires »,
- l'utilisation de gaz tel que l'Aligal® dans le domaine agro-alimentaire,
- l'interfaçage conditionneur-bouteille dans les opérations de remplissage. En effet, le processus de remplissage d'une bouteille peut être différent d'une bouteille à une autre et doit répondre à des critères plus ou moins stricts. Une interface entre bouteille et système de conditionnement permet alors de vérifier que la bouteille est bien pleine, a bien été remplie par le bon système et contient bien le bon fluide,
- l'interfaçage bouteille-pile à combustible (PAC). La bouteille peut communiquer son autonomie restante ou d'autres données à la PAC,
- dans le domaine du soudage-coupage, la connaissance du volume ou du profil de consommation par poste de travail est une donnée pertinente pour l'optimisation du procédé et des coûts. On envisage notamment d'interfacer un tel système avec les solutions existantes de suivi et d'optimisation de la productivité d'un atelier de soudage

Une cinquième application de l'invention concerne la facturation de la consommation du fluide contenu dans les bouteilles. On peut imaginer par exemple de facturer la location de la bouteille à l'heure avec un compteur type chronomètre intégré au module électronique sur la bouteille. Ce chronomètre serait déclenché dès l'arrivée de la bouteille chez le client et s'arrêterait dès qu'elle en ressort. On peut aussi imaginer une facturation liée à l'utilisation du gaz par le client (facturation au kWh pour l'hydrogène par exemple, facturation à l'heure de soudage, etc.), toujours grâce à une instrumentation appropriée de la bouteille.

Selon un mode de réalisation particulier de l'invention, ledit module électronique est rapporté sur la bouteille. Cependant, l'invention prévoit également que le module électronique est rapporté sur un équipement destiné à être connecté à la bouteille. L'intérêt de cette disposition réside notamment dans le fait qu'il n'est pas nécessaire dans ce cas d'équiper l'ensemble des bouteilles d'un module électronique, il suffit de le faire seulement sur les équipements fixes, tels que robinets, etc.

En pratique, le module électronique embarqué peut s'adapter aussi bien aux détendeurs des bouteilles qu'aux centrales à inversion. Dans les systèmes actuels de réapprovisionnement et de suivi des centrales à inversion, on dispose d'un capteur de pression filaire relié à une application logicielle, mettant à disposition les données nécessaires pour le réapprovisionnement. Equiper ces centrales d'un module électronique conforme à l'invention permet de s'affranchir des systèmes filaires coûteux et compliqués à mettre en place.

L'invention peut comporter tout ou partie des caractéristiques suivantes :
- ledit signal radiofréquence est émis par un module électronique rapporté sur la bouteille,
- ledit signal radiofréquence est émis par un module électronique rapporté sur un équipement destiné à être connecté à la bouteille,
- ladite donnée concerne la quantité de fluide restant dans la bouteille,
- ladite donnée concernant la quantité de fluide restant est comparée à au moins un seuil minimum,
- une alarme est déclenchée si la quantité de fluide restant dans la bouteille est inférieure audit seuil minimum,
- le signal radiofréquence est émis automatiquement selon une période donnée,
- le signal radiofréquence est émis sur alarme.

Le procédé peut s'appliquer :
- à la détermination de l'état de stocks de bouteilles de fluide sous pression,
- à la gestion du réapprovisionnement en bouteilles de fluide sous pression,
- au suivi de consommation du fluide contenu dans des bouteilles de fluide sous pression,
- à l'envoi d'informations à un équipement relié à ladite bouteille de fluide sous pression,
- à la facturation de la consommation du fluide contenu dans des bouteilles de fluide sous pression.

L'invention concerne également un système comprenant :
- un module électronique apte à émettre un signal radiofréquence contenant ladite donnée,
- une plateforme de réception et de traitement, apte à recevoir ledit signal radiofréquence et en extraire ladite donnée, à mesurer la puissance du signal reçu et en déduire une information de localisation de ladite bouteille, et à traiter ladite donnée en fonction de ladite information de localisation,
- ledit module électronique est rapporté sur la bouteille,
- ledit module électronique est rapporté sur un équipement destiné à être connecté à la bouteille.

La description qui va suivre en regard des dessins annexés, donnés à titre d'exemples non limitatifs, fera bien comprendre en quoi consiste l'invention et comment elle peut être réalisée.
La figure 1 est un schéma d'un système de traitement de données conforme à l'invention.
La figure 2 est une vue en coupe d'une bouteille équipée d'un module électronique conforme à l'invention.
La figure 3 est un schéma d'une variante d'un système de traitement de données conforme à l'invention.

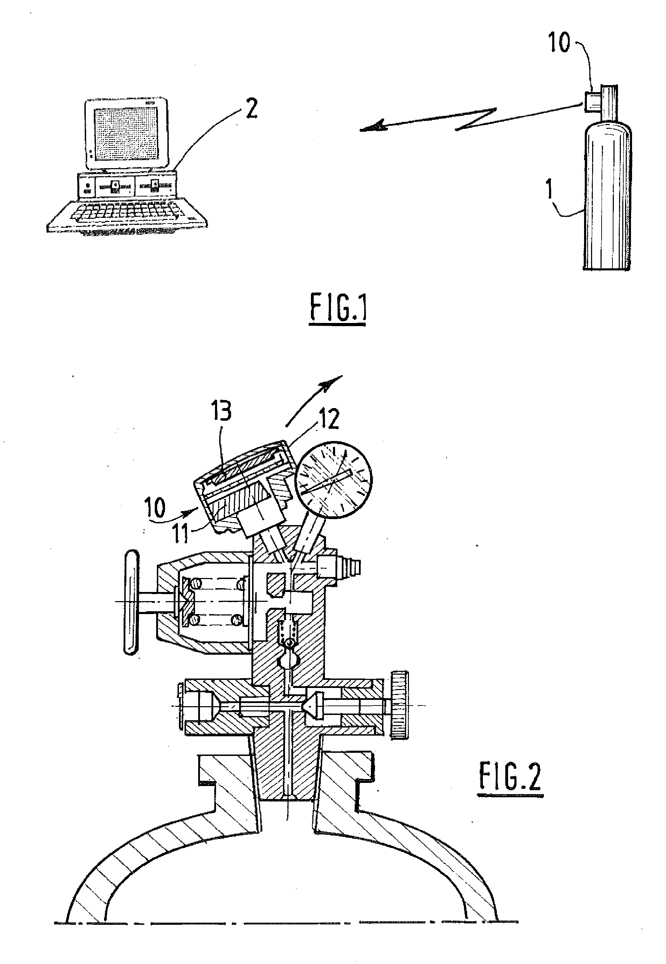

Sur la figure 1 est représenté de façon schématique un système de traitement d'au moins une donnée relative à une bouteille 1 contenant un fluide sous pression tel qu'un gaz à application industrielle ou médicale. On rappellera qu'il existe deux types de données possibles : des données dites statiques, c'est-à-dire des données relatives à un état de la bouteille ou du fluide sous pression qu'elle contient (exemple : numéro de lot, identifiant bouteille, date de péremption, etc.), qui sont des données qui peuvent évoluer au cours du temps, à condition qu'une opération de mise à jour des données dans le système soit effectuée; et des données dites dynamiques, c'est-à-dire des données liées à la mesure d'une grandeur physique du fluide sous pression contenu dans la bouteille, telles que la pression et la température, données mises à jour automatiquement à la fréquence d'échantillonnage des capteurs embarqués sur la bouteille.

Ce système est composé de deux entités principales, à savoir un module électronique 10 apte à mesurer des grandeurs physiques, les enregistrer, et émettre un signal radiofréquence contenant lesdites données et une plateforme 2 de réception et de traitement.

On remarquera que sur la figure 1 le module électronique 10 est rapporté sur la bouteille 1. Cependant, comme cela a été mentionné plus haut, ce même module pourrait équiper non pas la bouteille elle-même mais un élément de connectique auquel la bouteille serait reliée.

Le module électronique 10 comprend des moyens de détermination de la ou les données à transmettre à la plateforme 2. Ces moyens peuvent être des capteurs mesurant directement les données, comme des capteurs de pression ou de température par exemple. Mais la donnée peut être aussi déterminée par calcul à partir de données mesurées, comme la quantité de fluide restant dans la bouteille qui peut être déduite de mesures de pression et de température. Dans ce dernier cas, le module 10 comprend une unité de calcul, telle qu'un microprocesseur intégré à une carte électronique 11, comme indiqué sur la figure 2. La carte électronique 11 comporte également un étage d'émission du signal radiofréquence. Un système 12 d'alimentation électrique sans fil, batterie, cellule photovoltaïque ou système inductif, est prévu dans le module électronique 10 pour alimenter la carte 11 ainsi qu'un afficheur 13, à cristaux liquides par exemple.

Le module électronique 10 peut émettre le signal radiofréquence automatiquement régulièrement dans le temps selon une période donnée. Ce signal peut également être émis dès qu'une alarme est déclenchée, lorsque par exemple la quantité de fluide restant dans la bouteille 1 est inférieure à un seuil donné. A cet effet, le module 10 comprend des moyens de comparaison de ladite donnée à un seuil et des moyens de déclenchement d'une alarme en fonction du résultat de ladite comparaison. Le signal d'alarme est envoyé à la plateforme 2 qui, ainsi informée de la situation, peut prendre toutes les mesures nécessaires.

Le module électronique 10 peut intégrer divers autres composants, non représentés :
- des systèmes de communication d'informations, comme des voyants, un avertisseur sonore, un haut-parleur,
- un capteur de mouvement ou de déplacement,
- un capteur de luminosité ou un capteur sonore,
- un ou plusieurs boutons d'interface de saisie,
- un récepteur radio.

La plateforme 2 dispose également de moyens de mesure de la puissance du signal radiofréquence reçu, appelée aussi RSSI, ceci dans le but d'obtenir une information de localisation de la bouteille et d'enrichir le traitement de la ou des données extraites du signal radiofréquence en y intégrant cette information complémentaire.

Cette mesure permet de déduire dans quelle zone de couverture se trouve la bouteille. Si les données d'une bouteille ne sont reçues que par un seul récepteur, c'est que cette bouteille se trouve dans la zone de ce récepteur, c'est-à-dire le périmètre de couverture radio du récepteur. En revanche, si les données d'une bouteille sont reçues par plusieurs récepteurs, le RSSI sera d'une grande aide puisqu'il permettra de déduire la zone dans laquelle se trouve réellement la bouteille, à savoir la zone du récepteur qui reçoit le RSSI le plus élevé.

La plateforme 2 comporte aussi des moyens usuels de réception du signal radiofréquence émis par le module électronique 10 et des moyens pour extraire la ou les données contenues dans ce signal afin de les traiter de manière conforme à l'utilisation qu'il est prévu d'en faire; on se référera à cet égard aux nombreux exemples d'application fournis plus haut.

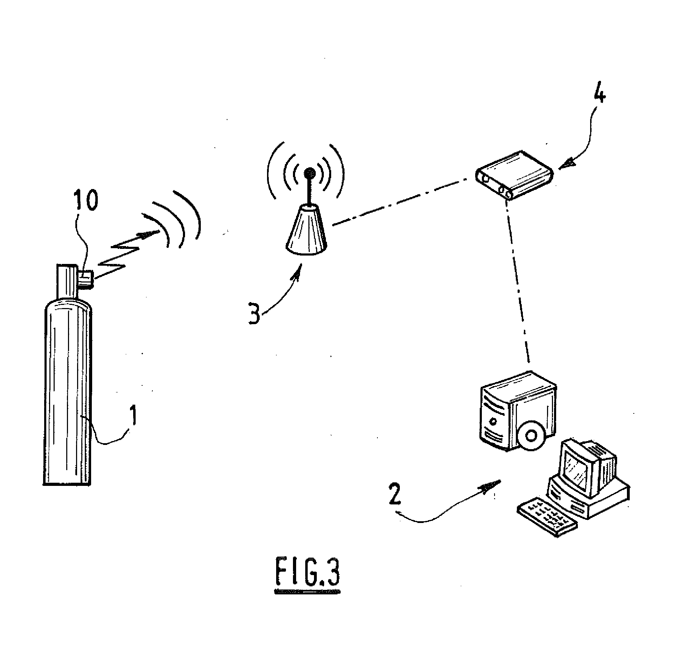

Dans la variante de la figure 3, le module électronique 10 de la bouteille 1 communique avec la plateforme 2 contrôle (ordinateur par exemple) via une antenne 3 et un récepteur 4 couplé à l'antenne. La liaison entre le récepteur 4 et l'outil de contrôle 2 peut être hertzienne ou filaire.

## Revendications

1. Procédé de traitement d'au moins une donnée relative à une bouteille (1) transportable de gaz sous pression ou un ensemble de bouteilles de ce type (cadre de bouteilles), **caractérisé en ce que** ledit procédé comprend les étapes consistant à :
- émettre un signal radiofréquence contenant ladite donnée,
- recevoir ledit signal radiofréquence et en extraire ladite donnée,
- mesurer la puissance du signal reçu et en déduire une information de localisation de ladite bouteille ou ensemble de bouteilles,
- traiter ladite donnée en fonction de ladite information de localisation,
ledit signal radiofréquence étant émis par un module électronique (10) rapporté sur la bouteille (1), sur un équipement destiné à être connecté à la ou les bouteille(s) (1) parmi : un robinet, un détendeur, une centrale d'inversion.

2. Procédé selon la revendication 1, dans lequel ladite donnée concerne la quantité de fluide restant dans la ou les bouteille(s) (1).

3. Procédé selon la revendication 2, dans lequel ladite donnée concernant la quantité de fluide restant est comparée à au moins un seuil minimum.

4. Procédé selon la revendication 3, dans lequel une alarme est déclenchée si la quantité de fluide restant dans la ou les bouteille(s) (1) est inférieure audit seuil minimum.

5. Procédé selon l'une quelconque des revendications 1 à 4, dans lequel le signal radiofréquence est émis automatiquement selon une période donnée.

6. Procédé selon l'une quelconque des revendications 1 à 5, dans lequel le signal radiofréquence est émis sur alarme.

7. Application du procédé selon l'une quelconque des revendications 1 à 6 à la détermination de l'état de stocks de bouteilles de fluide sous pression.

8. Application du procédé selon l'une quelconque des revendications 1 à 6 à la gestion du réapprovisionnement en bouteilles de fluide sous pression.

9. Application du procédé selon l'une quelconque des revendications 1 à 6 au suivi de consommation du fluide contenu dans des bouteilles de fluide sous pression.

10. Application du procédé selon l'une quelconque des revendications 1 à 6 à l'envoi d'informations à un équipement relié à ladite bouteille de fluide sous pression.

11. Application du procédé selon l'une quelconque des revendications 1 à 6 à la facturation de la consommation du fluide contenu dans des bouteilles de fluide sous pression.

12. Système de traitement d'au moins une donnée relative à une bouteille (1) transportable de gaz sous pression, **caractérisé en ce qu'**il comprend :
- un module électronique (10) apte à émettre un signal radiofréquence contenant ladite donnée,
- une plateforme (2) de réception et de traitement, conformée pour recevoir à recevoir ledit signal radiofréquence et en extraire ladite donnée, mesurer la puissance du signal reçu et en déduire une information de localisation de ladite ou desdites bouteille(s) (1), et traiter ladite donnée en fonction de ladite information de localisation, ledit module électronique (10) étant rapporté sur la ou les bouteille(s) (1), sur un équipement destiné à être connecté à la ou les bouteille(s) (1), parmi : un robinet, un détendeur, une centrale d'inversion.
